(19)

Europäisches
Patentamt
European
Patent Office
Office européen
des brevets

(11) **EP 3 832 543 A1**

(12) **EUROPEAN PATENT APPLICATION**

(43) Date of publication:
**09.06.2021 Bulletin 2021/23**

(51) Int Cl.:
**G06K 9/62** (2006.01)    **G06K 9/00** (2006.01)

(21) Application number: **20204652.0**

(22) Date of filing: **29.10.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(30) Priority: **03.12.2019   CN 201911219886**

(71) Applicant: **FUJITSU LIMITED
Kanagawa 211-8588 (JP)**

(72) Inventors:
• **Wang, Mengjiao
  Beijing, 100027 (CN)**
• **Liu, Rujie
  Beijing, 100027 (CN)**

(74) Representative: **Hoffmann Eitle
Patent- und Rechtsanwälte PartmbB
Arabellastraße 30
81925 München (DE)**

(54)   **INFORMATION PROCESSING APPARATUS AND INFORMATION PROCESSING METHOD**

(57)    The present disclosure relates to an information processing method and an information processing apparatus. The information processing apparatus according to the present disclosure comprises: a determining unit configured to respectively determine a discrimination margin of each class of a plurality of classes of a training sample set containing the plurality of classes relative to other classes; and a training unit configured to use, based on the determined discrimination margin, the training sample set for training a classifying model. By the information processing apparatus and the information processing method according to the present disclosure, a classifying model can be trained by using a training sample set of which training samples are distributed unevenly, so that a classifying model capable of performing accurate classification can be obtained without significantly increasing a calculation cost.

**FIG. 1**

EP 3 832 543 A1

**Description**

**FIELD OF THE INVENTION**

Embodiments disclosed herein relate to the technical field of information processing. In particular, embodiments of the present disclosure relate to an information processing apparatus and an information processing method which train a classifying model by using a training sample set.

**BACKGROUND**

The development of a deep learning method of a Convolutional Neural Network (CNN) and the construction of a large-scale database with a large number of labelled face images make the performance of face recognition greatly improved. A Softmax function, as a loss function, is applied to train a CNN classifying model. In particular, training a CNN classifying model adopting a Softmax loss function by using a training sample set of which training samples are distributed evenly may achieve very high precision in face recognition.

However, currently, the distribution of samples in a training sample set for face recognition is often uneven, that is to say, the number of training samples of each class in the training sample set differs greatly. Taking an MS-Celeb-1M face image database which is currently widely used as a training sample set for face recognition as an example, the number of training samples (face images) of each class (each person) varies within a range from 1 to 2500, and more than 80% classes have less than 20 training samples.

When the above training sample set is used for training, the obtained CNN classifying model cannot achieve satisfactory effects for recognition of face images.

Therefore, it is necessary to adjust a training process of a CNN classifying model for adaptation to a training sample set of which samples are distributed unevenly, so that a CNN classifying model trained by using such a training sample set may also perform accurate recognition for face images.

**SUMMARY OF THE INVENTION**

A brief summary of the present disclosure will be given below to provide a basic understanding of some aspects of the present disclosure. It should be understood that, the summary is not an exhaustive summary of the present disclosure. It does not intend to define a key or important part of the present disclosure, nor does it intend to limit the scope of the present disclosure. Its object is only to briefly present some concepts, which serve as a preamble of the more detailed descriptions discussed later.

An object of the present disclosure is to provide an information processing technology for training a classifying model by using a training sample set. By an information processing apparatus and an information processing method according to the present disclosure, even if a classifying model is trained by using a training sample set of which training samples are distributed unevenly, the obtained classifying model may still perform accurate classification.

To achieve the object of the present disclosure, according to an aspect of the present disclosure, there is provided an information processing apparatus, comprising: a determining unit configured to respectively determine a discrimination margin of each class of a plurality of classes of a training sample set containing the plurality of classes relative to other classes; and a training unit configured to use, based on the determined discrimination margin, the training sample set for training a classifying model.

According to another aspect of the present disclosure, there is provided an information processing method, comprising: a determining step of respectively determining a discrimination margin of each class of a plurality of classes of a training sample set containing the plurality of classes relative to other classes; and a training step of using, based on the determined discrimination margin, the training sample set for training a classifying model.

According to still another aspect of the present disclosure, there is further provided a computer program capable of implementing the above information processing method. In addition, there is further provided a computer program product in at least computer readable medium form, which has recorded thereon computer program codes used for implementing the above information processing method.

By the information processing technology according to the present disclosure, even when a classifying model is trained by using a training sample set of which training samples are distributed unevenly, a classifying model capable of performing accurate classification still can be obtained without significantly increasing a calculation cost.

**BRIEF DESCRIPTION OF THE DRAWINGS**

The above and other objects, features and advantages of the present disclosure will be understood more easily with reference to the descriptions of embodiments of the present disclosure combined with the drawings below. In the drawings:

FIG. 1 is a block diagram showing an information processing apparatus according to an embodiment of the present disclosure;

FIGS. 2A and 2B are schematic views showing geometric interpretations of an operation of a determining unit according to an embodiment of the present disclosure;

FIGS. 3A and 3B are schematic views showing geometric interpretations of determining a discrimination margin of a class by the determining unit according to the embodiment of the present disclosure according to a sample number of the class;

FIG. 4 is a curve graph showing an example of the discrimination margin;

FIG. 5 is a flowchart showing an information processing method according to an embodiment of the present disclosure; and

FIG. 6 shows a structure diagram of a general-purpose machine that may be used to realize the information processing apparatus and the information processing method according to the embodiments of the present disclosure.

## DETAILED DESCRIPTION OF THE INVENTION

Hereinafter, some embodiments of the present disclosure will be described in detail with reference to the appended illustrative diagrams. In denoting elements in figures by reference signs, identical elements will be denoted by identical reference signs although they are shown in different figures. Further, in the descriptions of the present disclosure below, detailed descriptions of known functions and configurations incorporated into the present disclosure will be omitted while possibly making the subject matter of the present disclosure unclear.

The terms used herein are used for the purpose of describing specific embodiments only, but are not intended to limit the present disclosure. As used herein, a singular form is intended to also include a plural, unless otherwise indicated in the context. It will also be understood that, the terms "including", "comprising" and "having" used in the specification are intended to specifically indicate the existence of features, entities, operations and / or components as stated, but do not exclude the existence or addition of one or more other features, entities, operations and / or components.

All the terms used herein, including technical terms and scientific terms, have the same meanings as those commonly understood by those skilled in the art to which the concept of the present invention pertains, unless otherwise defined. It will be further understood that, terms such as those defined in common dictionaries should be interpreted as having meanings consistent with their meanings in the context of the relevant field, and should not be interpreted in an idealized or overly formal sense unless they are clearly defined herein.

In the following description, many specific details are set forth to provide a comprehensive understanding to the present disclosure. The present disclosure may be implemented without some or all of these specific details. In other instances, to avoid the present disclosure from being obscured due to unnecessary details, only components related closely to the solutions according to the present disclosure are shown in the drawings, while other details not related closely to the present disclosure are omitted.

As a loss function for training a classifying model, a Softmax function may be understood as a combination of a (max) function taking a maximum value from among a plurality of values with a probability of each value of the plurality of values to be taken as the maximum value. The Softmax function, as a loss function, has been widely applied in various artificial neural networks.

A Convolutional Neural Network (CNN) is a feedforward artificial neural network, and has been widely applied to the field of image and speech processing. The convolutional neural network is based on three important features, i.e., receptive field, weight sharing, and pooling.

The convolutional neural network assumes that each neuron has a connection relationship with only neurons in an adjacent area and they produce influence upon each other. The receptive field represents a size of the adjacent area. In addition, the convolutional neural network assumes that connection weights between neurons in a certain area may also be applied to other areas, namely weight sharing. The pooling of the convolutional neural network refers to a dimension reduction operation performed based on aggregation statistics when the convolutional neural network is used for solving the problem of classification.

The convolutional neural network will not be described in more details since it is known to those skilled in the art.

The Softmax function may map an output of the convolutional neural network to an interval [0, 1], to represent a probability of input data to belong to a corresponding class, and thus may be applied to a classifying model.

In a training process of the convolutional neural network, it is necessary to calculate a difference between a forward propagation result of the convolutional neural network and a result calculated with labelled training samples, and to use the difference as a loss to perform back propagation of the convolutional neural network, so as to train the convolutional neural network. The Softmax function may be used to perform learning of weights of the convolutional neural network in a pooling operation.

Specifically, the Softmax loss function is in the form as shown by the following equation (1).

Equation (1)

$$L_s = -\sum_{i=1}^{k} \log \frac{e^{W_{y_i}^T f(x_i)}}{\sum_{j=1}^{n} e^{W_{y_j}^T f(x_i)}}$$

In the equation (1), $L_s$ represents a loss of the Softmax function, which is defined as a cross entropy. $k$ represents a number of training sample $x_i$ ($1 \leq i \leq N$), and $n$ represents a number of class $y_j$ ($1 \leq j \leq n$). Note that, the expression "training sample" herein refers to a sample used to train a classifying model, i.e., a labelled sample; for example, a label (class) of the training sample $x_i$ is $y_i$. Further, $f(x_i)$ represents an extracted feature vector of the training sample $x_i$. Further, $W_{y_j}$ represents a center of the class $y_j$ in a vector space, and also has the form of a vector. For ease of description that follows, $W_{y_j}$ will be referred to as a feature vector of the class $y_j$.

The purpose of training a classifying model by using the softmax function as a loss function is to make

$$W_{y_i}^T f(x_i)$$

as large as possible.

The following equation (2) may be obtained by performing further transformation on the equation (1).

Equation (2)

$$W_{y_i}^T f(x_i) = \left\| W_{y_i} \right\| \left\| f(x_i) \right\| \cos \theta$$

Wherein, $\|W_{y_i}\|$ and $\|f(x_i)\|$ represent modulus of the vectors $W_{y_i}$ and $f(x_i)$, respectively, and $\theta$ represents an included angle between the vectors $W_{y_i}$ and $f(x_i)$ in the vector space, where $0 \leq \theta \leq \pi$. As can be seen from the above equation (2), if it is desired to make the Softmax loss function $L_s$ as small as possible, it is needed to make $\theta$ as small as possible. In other words, by reducing $\theta$, the feature vector $f(x_i)$ of the training sample $x_i$ may be made closer, in the vector space, to the center vector $W_{y_i}$ of the class $y_j$ to which it pertains in the vector space.

The Softmax loss function $L_s$ will not be described in more details since it is known to those skilled in the art.

As stated above, if a classifying model is trained by using a training sample set of which training samples are distributed unevenly, the existing classifying model obtained by performing learning by using the Softmax loss function $L_s$ cannot achieve satisfactory results, and thus it is necessary to improve the Softmax loss function $L_s$ to guide the classifying model to perform learning.

Therefore, the present disclosure proposes an information processing technology, so that even if a classifying model is trained by using a training sample set of which training samples are distributed unevenly, the obtained classifying model still has higher discrimination accuracy. The technology according to the present disclosure determines a discrimination margin of each class in the training sample set relative to other classes, and then trains the classifying model based on the determined discrimination margin, so as to realize the guidance for the learning of the classifying model.

Embodiments of the present disclosure will be described in more details combined with the drawings below.

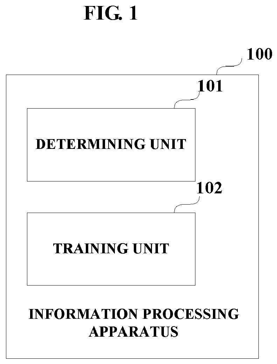

FIG. 1 is a block diagram showing an information processing apparatus 100 according to an embodiment of the present disclosure.

The information processing method 100 according to a first embodiment of the present disclosure comprises a determining unit 101 and a training unit 102.

According to an embodiment of the present disclosure, the determining unit 101 may respectively determine a discrimination margin of each class of a plurality of classes of a training sample set containing the plurality of classes relative to other classes.

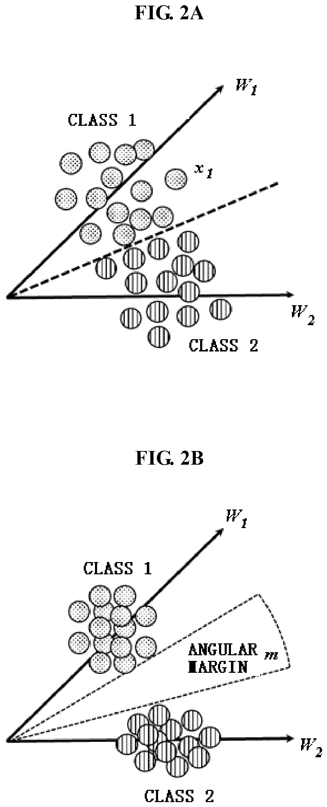

FIGS. 2A and 2B are schematic views showing geometric interpretations of an operation of the determining unit 101 according to the embodiment of the present disclosure.

The idea of the embodiments of the present disclosure is to adjust a discrimination margin between different classes according to the distribution of training samples in a training sample set before training, so as to enhance the differentiability between training samples of different classes.

As shown in FIG. 2A, a feature vector of class 1 is $W_1$, and a feature vector of class 2 is $W_2$. FIG. 2A shows a geometric schematic view of the feature vectors $W_1$ and $W_2$ of classes 1 and 2 in the vector space.

Further, it is assumed that the training sample $x_1$ belongs to class 1. In order to enable a classification mode to correctly classify $x_1$ into class 1, the softmax function should make $W_1^T f(x_1) > W_2^T f(x_1)$ i.e., $\|W_1\|\|f(x_1)\|\cos\theta_1 > \|W_2\|\|f(x_1)\|\cos\theta_2$, where $\theta_1$ is an included angle between the vectors $W_1$ and $f(x_1)$ in the vector space, and $\theta_2$ is an included angle between the vectors $W_2$ and $f(x_1)$ in the vector space.

According to an embodiment of the present disclosure, when training is performed by using a training sample set of which training samples are distributed unevenly, in order to make a classification result more accurate, a discrimination margin $m$ may be introduced so that $\|W_1\|\|f(x_1)\|\cos\theta_1 > \|W_1\|\|f(x_1)\|\cos(\|\theta_1+m) > \|W_2\|\|f(x_1)\|\cos\theta_2$. The discrimination margin m is reflected as the angular margin shown in FIG. 2B in the vector space, where $0 \leq \theta + m \leq \pi$.

Specifically, by introducing m into the equation (2) and performing transformation on the equation (1) based on the equation (2), the following equation (3) may be obtained.

Equation (3)

$$L_s = -\sum_{i=1}^{k} \log \frac{e^{\|W_{y_i}\|\|f(x_i)\|\cos(\theta+m)}}{e^{\|W_{y_i}\|\|f(x_i)\|\cos(\theta+m)} + \sum_{j=1, j \neq y_i}^{n} e^{W_{y_j}^T f(x_i)}}$$

In geometric sense, by adding the discrimination margin m into the above equation (2), $\theta$ may be reduced so that the feature vector $f(x_i)$ of the training sample $x_i$ may be made closer, in the vector space, to the feature vector $W_{y_i}$ of the class $y_j$ to which it pertains in the vector space, thus improving the classification precision.

According to an embodiment of the present disclosure, the determining unit 101 may determine an upper limit of the discrimination margin $m$ according to a number of the plurality of classes and a dimension of a feature vector of the training sample. For each class, the determining unit 101 may determine a discrimination margin $m$ of the class according to the upper limit $m$ of the discrimination margin and a number of training samples belonging to the class.

Specifically, according to FIG. 2B, the discrimination margin (angular margin) $m$ should be less than an included angle between feature vectors (for example, vectors $W_1$ and $W_2$) of two classes (for example, classes 1 and 2) in the vector space, so an included angle between feature vectors of the closest two classes in the vector space may be determined as an upper limit of the angular margin $m$.

According to an embodiment of the present disclosure, the included angle between the feature vectors of the closest two classes in the vector space may be determined from a vector dimension of the vector space and a number of a plurality of classes to which a plurality of training samples in the training sample set belong. Specifically, assuming that the vector dimension is $d$ and the number of classes is $n$, a maximum included angle between the feature vectors of the closest two classes in the vector space may be calculated by optimizing the loss function given in the following equation (4).

Equation (4)

$$L_C = \frac{1}{n} \sum_{i=1}^{n} \underset{j=1, j \neq i}{\arg\min} \{ \arccos \left( W_i^T W_j \right) \}$$

Wherein the vector dimension *d* is reflected in an internal product $W_i^T W_j$. In the above equation (4), arccos is an arc cosine function, and argmin represents a value of *W* when arccos $\left( W_i^T W_j \right)$ is minimized.

The purpose of the above optimization process is to maximize the loss function $L_C$. The above optimization process may be represented by the following equation (5).

Equation (5)

$$\hat{W}_i' = W_i' + \mu \frac{\partial L_c}{\partial W_i'}$$

Wherein $\mu$ is a learning rate, which may be determined according to experiments or experience. The above equation (5) reflects an updating iteration process of *W*.

According to an embodiment of the present disclosure, in the optimization process of the loss function $L_C$, the learning rate $\mu$ may first adopt a larger value, and the value of the learning rate $\mu$ may gradually decrease as the optimization process proceeds.

Upon completion of the optimization process, $L_C$ may be determined as the upper limit $m_{upper}$ of the angular margin *m*.

It should be understood by those skilled in the art that, the process of determining the upper limit $m_{upper}$ of the angular margin *m*, i.e., the optimization process of the loss function $L_C$, may be carried out offline. At this point, as stated above, the optimization process of the loss function $L_C$ is not related to the value of *W* itself, but is related only to the vector dimension and the class *n*. Specifically, $W_i$ represents a feature vector of class i in a d-dimensional vector space, and a total of n feature vectors $W_i$ are distributed in the d-dimensional vector space. The optimization process of the loss function $L_C$ may be understood as such that an included angle between the feature vectors Wi when the n feature vectors $W_i$ are evenly distributed in the d-dimensional vector space is exactly the upper limit $m_{upper}$ of the angular margin *m*.

According to an embodiment of the present disclosure, for each class, the determining unit 101 may determine the discrimination margin *m* of the class according to the upper limit $m_{upper}$ of the discrimination margin *m* and a number of training samples belonging to the class.

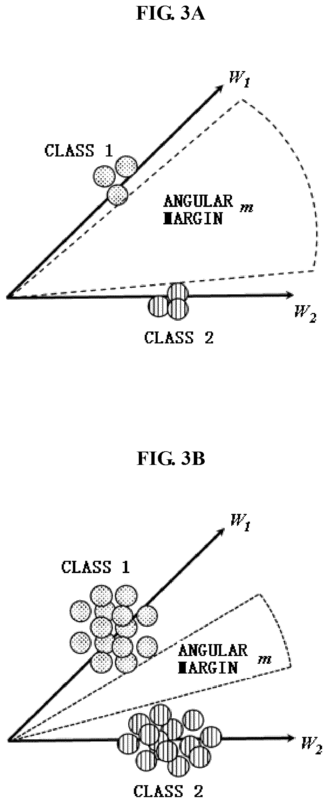

FIGS. 3A and 3B are schematic views showing geometric interpretations of determining the discrimination margin of a class by the determining unit 101 according to the embodiment of the present disclosure according to a sample number of the class.

As shown in FIGS. 3A and 3B, according to an embodiment of the present disclosure, for a class having a larger number of training samples, the discrimination margin of the class is determined to be smaller, and wherein, for a class having a smaller number of training samples, the discrimination margin of the class is determined to be larger.

Specifically, as shown in FIG. 3A, if both class 1 and class 2 have a smaller number of samples, the value of the discrimination margin *m* should be as close as possible to the upper limit $m_{upper}$ of *m* to obtain better discrimination performance. On the contrary, as shown in FIG. 3B, if both class 1 and class 2 have a larger number of samples, the value of the discrimination margin *m* may be at least greater than or equal to 0.

It should be understood that, FIGS. 3A and 3B show relatively extreme cases. In addition, if there is a larger difference between the number of samples of class 1 and the number of samples of class 2, a difference between the value of the discrimination margin *m* for class 1 and the value of the discrimination margin for class 2 is larger. Specifically, the discrimination margin of a class having a larger number of training samples is smaller, while the discrimination margin of a class having a smaller number of training samples is larger, and values should be specifically taken in an interval [0, $m_{upper}$] based on the number of samples.

According to an embodiment of the present disclosure, the value of $m$ may smoothly decrease in the interval $[0, m_{upper}]$ from a class with the smallest number of samples to a class with the largest number of samples.

Taking use of an MS-Celeb-1M face image database as a training sample set to train a CNN classifying model as an example, it is assumed that a dimension of the feature vector of the sample and the feature vector of the class is 512, and the upper limit $m_{upper}$ of the discrimination margin $m$ thus obtained by optimizing the loss function $L_C$ is 1.5.

In order to enable the value of $m$ to smoothly decrease in the interval $[0, m_{upper}]$ from the class with the smallest number of samples to the class with the largest number of samples, the discrimination margin $m$ of each class may be calculated by the following equation (6).

Equation (6)

$$m = \begin{cases} \dfrac{a}{b+x}, & x < 150 \\ 0, & x \geq 150 \end{cases}$$

In the equation (6), x represents the number of samples belonging to the class, $a$ and $b$ may be positive integers, and their values should satisfy $\dfrac{a}{b+1} \leq m_{upper}$. According to the above equation (6), when the number of samples of a class is larger than or equal to 150, it is considered that the number of samples of this class is large, so the value of the discrimination margin $m$ should be smaller, so the value is 0. Further, when the number of samples of a class is smaller than 150, the value of the discrimination margin $m$ should gradually increase as the number of samples decreases, but should not exceed the upper limit $m_{upper}$ of the discrimination margin $m$. Further, the number of samples of a class is at least 1, and for this class, its discrimination margin $m$ is the largest, but should also be smaller than the upper limit $m_{upper}$ of the discrimination margin $m$.

Further, according to an embodiment of the present disclosure, the determining unit 101 may also determine a lower limit $m_{lower}$ of the discrimination margin $m$, and for each class of the plurality of classes, respectively determine the discrimination margin of the class according to the upper limit $m_{upper}$ and lower limit $m_{lower}$ of the discrimination margin $m$ and the number of training samples belonging to the class. According to an embodiment of the present disclosure, the lower limit $m_{lower}$ of the discrimination margin $m$ may be determined according to factors such as experience, a training sample set as used, a specific distribution situation of samples and the like.

Continuing to take use of an MS-Celeb-1M face image database as a training sample set to train a CNN classifying model as an example, it is assumed that a dimension of the feature vector of the sample and the feature vector of the class is 512, and the upper limit $m_{upper}$ of the discrimination margin $m$ thus obtained by optimizing the loss function $L_C$ is 1.5. Further, the lower limit $m_{lower}$ of the discrimination margin $m$ may be set to 0.5.

In order to enable the value of $m$ to smoothly decrease in the interval $[ml_{ower}, m_{upper}]$ from the class with the smallest number of samples to the class with the largest number of samples, the discrimination margin $m$ of each class may be calculated by the following equation (7).

Equation (7)

$$m = \begin{cases} \dfrac{a}{b+x}, & x < 150 \\ 0.5, & x \geq 150 \end{cases}$$

In the equation (7), x represents the number of samples belonging to the class, $a$ and $b$ may be positive integers,

$$\frac{a}{b+1} \leq m_{upper}, \frac{a}{b+150} \geq m_{lower}$$

and their values should satisfy $\qquad$ . According to the above equation (7), when the number of samples of a class is larger than or equal to 150, it is considered that the number of samples of this class is large, so the value of the discrimination margin $m$ should be smaller, so the value is 0.5. Further, when the number of samples of a class is smaller than 150, the value of the discrimination margin $m$ should gradually increase as the number of samples decreases, but should not exceed the upper limit $m_{upper}$ of the discrimination margin $m$. Further, the number of samples of a class is at least 1, and for this class, its discrimination margin $m$ is the largest, but should also be smaller than the upper limit $m_{upper}$ of the discrimination margin $m$.

It should be recognized by those skilled in the art that, the above equations (6) and (7) only give exemplary embodiments of determining the discrimination margin $m$ of each class based on the upper limit $m_{upper}$ of the discrimination margin $m$, but the present disclosure is not limited to this. On the basis of the above teaching of the present disclosure, those skilled in the art can envisage other ways to determine the discrimination margin $m$ of each class based on the upper limit $m_{upper}$ of the discrimination margin $m$, so as to at least cause the value of $m$ to smoothly decrease in the interval [0, $m_{upper}$] from the class with the smallest number of samples to the class with the largest number of samples.

In particular, as stated above, those skilled in the art can also envisage other ways to determine the discrimination margin $m$ of each class based on the upper limit $m_{upper}$ and the lower limit $m_{lower}$ of the discrimination margin $m$, so as to at least cause the value of $m$ to smoothly decrease in the interval [$m_{lower}$, $m_{upper}$] from the class with the smallest number of samples to the class with the largest number of samples.

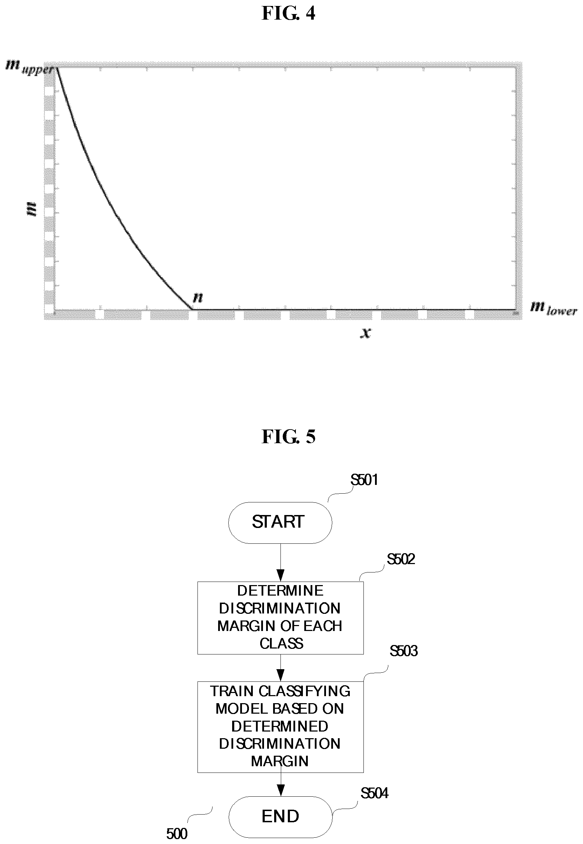

FIG. 4 is a curve graph showing an example of the discrimination margin $m$. As shown in FIG. 4, the discrimination margin $m$ smoothly varies between the upper limit $m_{upper}$ and the lower limit $m_{lower}$ according to the number of samples of each class.

Referring back to FIG. 1, according to an embodiment of the present disclosure, the training unit 102 may use a training sample set for training a classifying model based on the determined discrimination margin $m$.

According to an embodiment of the present disclosure, after the determining unit 102 determines the discrimination margin $m$ of each class, the training unit 102 may substitute the discrimination margin $m$ into the loss function of the above equation (3) to thereby train the classifying model.

Here, although the embodiments of the present disclosure are described in the context of applying the softmax function as a loss function to a convolutional neural network (CNN) classifying model for face recognition, the present disclosure is not limited to this. Under the teaching of the present disclosure, those skilled in the art can envisage expanding the inventive idea of the present disclosure to other loss functions (such as Sigmoid function, Tanh function, and the like) for training a classifying model and other application fields (such as speech recognition, image retrieval, and the like), and all these variant solutions should be covered within the scope of the present disclosure. Further, the idea of the present disclosure may also be applied to other classifying models, and may be applied to other artificial neural networks except CNN, such as Recurrent Neural Network (RNN), Deep Neural Network (DNN), and the like, and all these variant solutions should be covered within the scope of the present disclosure.

Accordingly, the present disclosure further proposes an information processing method for training a classifying model by using a training sample set of which training samples are distributed unevenly.

FIG. 5 is a flowchart showing an information processing method 500 according to an embodiment of the present disclosure.

The information processing method 500 starts at step S501. Subsequently, in a determining step S502, a discrimination margin of each class of a plurality of classes of a training sample set containing the plurality of classes relative to other classes is respectively determined. According to an embodiment of the present disclosure, the processing in step S502 may be implemented, for example, by the determining unit 101 described above with reference to Figures 1 to 4.

Subsequently, in a training step S503, the training sample set is used for training a classifying model based on the determined discrimination margin. According to an embodiment of the present disclosure, the processing in step S503 may be implemented, for example, by the training unit 102 described above with reference to Figures 1 to 4.

Finally, the information processing method 500 ends at step S504.

In addition, the present disclosure further proposes a classifying model which may be trained by the information processing method described above with reference to FIG. 5.

By the information processing apparatus and the information processing method according to the present disclosure, in a case where the number of training samples of each class in the training sample set for training is larger, it is possible to perform targeted setting for the discrimination margin based on the number of training samples of each class according to an embodiment of the present disclosure. Therefore, according to an embodiment of the present disclosure, even if a classifying model is trained by using a training sample set of which training samples are distributed unevenly, the obtained classifying model may still obtain an accurate classification result.

It is shown below that, by using different training sample sets, namely LFW, CFP, AGE-DB and COX face image databases, the recognition precision of a CNN classifying model for face recognition trained through the information processing technology according to the present disclosure is significantly improved in terms of recognition accuracy as compared with the existing CNN classifying model.

| | LFW | CFP | AGE-DB | Cox | | |
| --- | --- | --- | --- | --- | --- | --- |
| | | | | Cam1 | Cam2 | Cam3 |
| Prior Art | 99.82 ±0.25 | 97.34 ±0.74 | 97.87 ±0.76 | 98.43 ±0.28 | 96.41 ±0.47 | 99.64 ± 0.14 |
| Present Disclosure | 99.82 ±0.20 | 97.73 ±0.65 | 98.18 ±0.74 | 98.74 ±0. 18 | 96.93 ±0.35 | 99.76 ±0.14 |

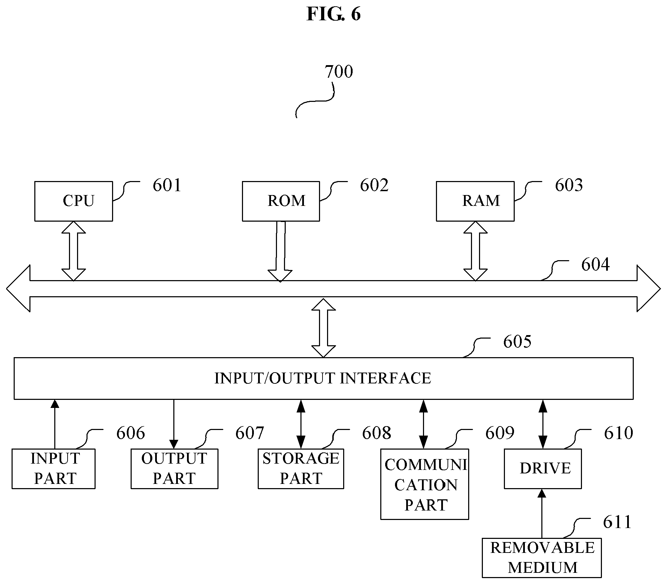

FIG. 6 shows a structure diagram of a general-purpose machine 600 that may be used to realize the information processing method and the information processing apparatus according to the embodiments of the present disclosure. The general-purpose machine 600 may be, for example, a computer system. It should be noted that, the general-purpose machine 600 is only an example, but does not imply a limitation to the use range or function of the information processing method and the information processing apparatus of the present disclosure. The general-purpose machine 600 should also not be construed to have a dependency on or a demand for any assembly or combination thereof as shown in the above information processing method and information processing apparatus.

In FIG. 6, a central processing unit (CPU) 601 performs various processing according to programs stored in a read-only memory (ROM) 602 or programs loaded from a storage part 608 to a random access memory (RAM) 603. In the RAM 603, data needed when the CPU 601 performs various processes and the like is also stored, as needed. The CPU 601, the ROM 602 and the RAM 603 are connected to each other via a bus 604. An input/output interface 605 is also connected to the bus 604.

The following components are connected to the input/output interface 605: an input part 606 (including keyboard, mouse and the like), an output part 607 (including display such as cathode ray tube (CRT), liquid crystal display (LCD) and the like, and loudspeaker and the like), a storage part 608 (including hard disc and the like), and a communication part 609 (including network interface card such as LAN card, modem and the like). The communication part 609 performs communication processing via a network such as the Internet. A drive 610 may also be connected to the input/output interface 605, as needed. As needed, a removable medium 611, such as a magnetic disc, an optical disc, a magnetic optical disc, a semiconductor memory and the like, may be installed on the drive 610, such that a computer program read therefrom is installed in the storage part 608 as needed.

In a case where the foregoing series of processing is implemented through software, programs constituting the software are installed from a network such as the Internet or a memory medium such as the removable medium 611.

It should be understood by those skilled in the art that, such a memory medium is not limited to the removable mediums 611 as shown in FIG. 6 in which programs are stored and which are distributed separatedly from the apparatus to provide the programs to users. Examples of the removable medium 611 include a magnetic disc (including floppy disc (registered trademark)), a compact disc (including compact disc read-only memory (CD-ROM) and digital video disk (DVD)), a magnetic optical disc (including mini disc (MD) (registered trademark)), and a semiconductor memory. Alternatively, the memory mediums may be hard discs included in the ROM 602 and the storage part 608, in which programs are stored and which are distributed together with the apparatus containing them to users.

In addition, the present disclosure further proposes a program product having stored thereon machine-readable instruction codes that, when read and executed by a machine, can implement the above information processing method according to the present disclosure. Accordingly, the various storage media for carrying such a program product which are enumerated above are also included within the scope of the present disclosure.

Detailed descriptions have been made above by means of block diagrams, flowcharts and/or embodiments, to describe specific embodiments of the apparatus and/or methods according to the embodiments of the present application. When these block diagrams, flowcharts and/or embodiments include one or more functions and/or operations, those skilled in the art appreciate that the various functions and/or operations in these block diagrams, flowcharts and/or embodiments may be implemented individually and/or jointly through various hardware, software, firmware or essentially any combination thereof. In an embodiment, several parts of the subject matter described in the present specification may be realized by an Application Specific Integrated Circuit (ASIC), a Field-Programmable Gate Array (FPGA), a Digital Signal Processor (DSP) or other integrations. However, those skilled in the art would appreciate that, some aspects of the embodiments described in the present specification may, completely or partially, be equivalently implemented in the form of one or more computer programs running on one or more computers (e.g., in the form of one or more computer programs running on one or more computer systems), in the form of one or more computer programs running on one or more processors (e.g., in the form of one or more computer programs running on one or more microprocessors), in the form of firmware, or in the form of essentially any combination thereof; moreover, according to the disclosure of the present specification, designing circuitry used for the present disclosure and/or compiling codes of software and/or firmware used for the present disclosure are completely within the reach of those skilled in the art.

It should be emphasized that the term "comprise/include", as used herein, refers to the presence of a feature, an element, a step or an assembly but does not preclude the presence or addition of one or more other features, elements, steps or assemblies. The terms "first", "second" and the like relating to ordinal numbers do not represent an implementation sequence or importance degree of features, elements, steps or assemblies defined by these terms, but is only used to perform identification among these features, elements, steps or assemblies for the sake of clarity of descriptions.

In conclusion, in the embodiments of the present disclosure, the present disclosure provides the following solutions, but is not limited hereto:

Solution 1. An information processing apparatus, comprising:

a determining unit configured to respectively determine a discrimination margin of each class of a plurality of classes of a training sample set containing the plurality of classes relative to other classes; and

a training unit configured to use, based on the determined discrimination margin, the training sample set for training a classifying model.

Solution 2. The information processing apparatus according to Solution 1, wherein the determining unit is configured to:

determine an upper limit of the discrimination margin according to a number of the plurality of classes and a dimension of a feature vector of the training sample; and

for each class of the plurality of classes, respectively determine the discrimination margin of the class according to the upper limit of the discrimination margin and a number of training samples belonging to the class.

Solution 3: The information processing apparatus according to Solution 2, wherein the determining unit is configured to:

determine a lower limit of the discrimination margin; and

for each class of the plurality of classes, respectively determine the discrimination margin of the class according to the upper limit and the lower limit of the discrimination margin and the number of training samples belonging to the class.

Solution 4. The information processing apparatus according to Solution 3, wherein for a class having a larger number of training samples, the discrimination margin of the class is determined to be smaller, and wherein, for a class having a smaller number of training samples, the discrimination margin of the class is determined to be larger.

Solution 5. The information processing apparatus according to Solution 4, wherein from a class having a smallest number of training samples to a class having a largest number of training samples, values of the discrimination margins gradually decrease from the upper limit to the lower limit.

Solution 6. The information processing apparatus according to Solution 3, wherein the determining unit is configured to determine the lower limit of the discrimination margin according to experience.

Solution 7. The information processing apparatus according to Solution 1, wherein the classifying model uses a Softmax function as a loss function.

Solution 8. An information processing method, comprising:

a determining step of respectively determining a discrimination margin of each class of a plurality of classes of a training sample set containing the plurality of classes relative to other classes; and

a training step of using, based on the determined discrimination margin, the training sample set for training a classifying model.

Solution 9. The information processing method according to Solution 8, wherein the determining step comprises:

determining an upper limit of the discrimination margin according to a number of the plurality of classes and a dimension of a feature vector of the training sample; and

for each class of the plurality of classes, respectively determining the discrimination margin of the class according to the upper limit of the discrimination margin and a number of training samples belonging to the class.

Solution 10. The information processing method according to Solution 9, wherein the determining step comprises:

determining a lower limit of the discrimination margin; and
for each class of the plurality of classes, respectively determining the discrimination margin of the class according to the upper limit and the lower limit of the discrimination margin and the number of training samples belonging to the class.

Solution 11. The information processing method according to Solution 10, wherein for a class having a larger number of training samples, the discrimination margin of the class is determined to be smaller, and wherein, for a class having a smaller number of training samples, the discrimination margin of the class is determined to be larger.

Solution 12. The information processing method according to Solution 11, wherein from a class having a smallest number of training samples to a class having a largest number of training samples, values of the discrimination margins gradually decrease from the upper limit to the lower limit.

Solution 13. The information processing method according to Solution 10, wherein the lower limit of the discrimination margin is determined according to experience.

Solution 14. The information processing method according to Solution 8, wherein the classifying model uses a Softmax function as a loss function.

Solution 15. A classifying model obtained by performing training with the information processing method according to any one of Solutions 8 to 14.

Solution 16. The classifying model according to Solution 15, wherein the classifying model is used for face recognition, and is realized by a convolutional neural network model.

While the present disclosure has been described above with reference to the descriptions of the specific embodiments of the present disclosure, it should be understood that those skilled in the art could carry out various modifications, improvements or equivalents on the present disclosure within the spirit and scope of the appended claims. The modifications, improvements or equivalents should also be considered to be included within the scope of protection of the present disclosure.

**Claims**

1.  An information processing apparatus, **characterized by** comprising:

a determining unit configured to respectively determine a discrimination margin of each class of a plurality of classes of a training sample set containing the plurality of classes relative to other classes; and
a training unit configured to use, based on the determined discrimination margin, the training sample set for training a classifying model.

2.  The information processing apparatus according to claim 1, **characterized in that** the determining unit is configured to:

determine an upper limit of the discrimination margin according to a number of the plurality of classes and a dimension of a feature vector of the training sample; and
for each class of the plurality of classes, determine the discrimination margin of the class according to the upper limit of the discrimination margin and a number of training samples belonging to the class.

3. The information processing apparatus according to claim 2, **characterized in that** the determining unit is configured to:

> determine a lower limit of the discrimination margin; and
> for each class of the plurality of classes, respectively determining the discrimination margin of the class according to the upper limit and the lower limit of the discrimination margin and the number of training samples belonging to the class.

4. The information processing apparatus according to claim 3, **characterized in that** for a class having a larger number of training samples, the discrimination margin of the class is determined to be smaller, and wherein, for a class having a smaller number of training samples, the discrimination margin of the class is determined to be larger.

5. The information processing apparatus according to claim 4, **characterized in that** from a class having a smallest number of training samples to a class having a largest number of training samples, values of the discrimination margins gradually decrease from the upper limit to the lower limit.

6. The information processing apparatus according to claim 3, **characterized in that** the determining unit is configured to determine the lower limit of the discrimination margin according to experience.

7. The information processing apparatus according to claim 1, **characterized in that** the classifying model uses a Softmax function as a loss function.

8. An information processing method, **characterized by** comprising:

> a determining step of respectively determining a discrimination margin of each class of a plurality of classes of a training sample set containing the plurality of classes relative to other classes; and
> a training step of using, based on the determined discrimination margin, the training sample set for training a classifying model.

9. The information processing method according to claim 8, **characterized in that** the determining step comprises:

> determining an upper limit of the discrimination margin according to a number of the plurality of classes and a dimension of a feature vector of the training sample; and
> for each class of the plurality of classes, respectively determining the discrimination margin of the class according to the upper limit of the discrimination margin and a number of training samples belonging to the class.

10. The information processing method according to claim 9, **characterized in that** the determining step comprises:

> determining a lower limit of the discrimination margin; and
> for each class of the plurality of classes, respectively determining the discrimination margin of the class according to the upper limit and the lower limit of the discrimination margin and the number of training samples belonging to the class.

11. The information processing method according to claim 10, **characterized in that** for a class having a larger number of training samples, the discrimination margin of the class is determined to be smaller, and wherein, for a class having a smaller number of training samples, the discrimination margin of the class is determined to be larger.

12. The information processing method according to claim 11, **characterized in that** from a class having a smallest number of training samples to a class having a largest number of training samples, values of the discrimination margins gradually decrease from the upper limit to the lower limit.

13. The information processing method according to claim 10, **characterized in that** the lower limit of the discrimination margin is determined according to experience.

14. A classifying model obtained by performing training with the information processing method according to claim 8.

15. The classifying model according to claim 14, **characterized in that** the classifying model is used for face recognition, and is realized by a convolutional neural network model.

# FIG. 1

100

101

**DETERMINING UNIT**

102

**TRAINING UNIT**

**INFORMATION PROCESSING APPARATUS**

FIG. 2A

FIG. 2B

## FIG. 3A

## FIG. 3B

**FIG. 4**

**FIG. 5**

# FIG. 6

700

| CPU | ROM | RAM |
|-----|-----|-----|

601    602    603

604

605

INPUT/OUTPUT INTERFACE

| INPUT PART | OUTPUT PART | STORAGE PART | COMMUNI CATION PART | DRIVE |
|------------|-------------|--------------|---------------------|-------|

606    607    608    609    610

REMOVABLE MEDIUM

611

Europäisches
Patentamt

European
Patent Office

Office européen
des brevets

# EUROPEAN SEARCH REPORT

Application Number

EP 20 20 4652

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Weiyang Liu ET AL: "SphereFace: Deep Hypersphere Embedding for Face Recognition", IEEE Conference on Computer Vision and Pattern Recognition (CVPR 2017), 1 July 2017 (2017-07-01), pages 6738-6746, XP055708086, DOI: 10.1109/CVPR.2017.713 ISBN: 978-1-5386-0457-1 Retrieved from the Internet: URL:https://arxiv.org/pdf/1704.08063.pdf [retrieved on 2020-06-23] * pages 2, 6; figures 2,5 * | 1-15 | INV. G06K9/62 G06K9/00 |
| X | Jiankang Deng ET AL: "ArcFace: Additive Angular Margin Loss for Deep Face Recognition", 2019 IEEE/CVF Conference on Computer Vision and Pattern Recognition (CVPR), 20 November 2018 (2018-11-20), pages 4685-4694, XP055708085, DOI: 10.1109/CVPR.2019.00482 ISBN: 978-1-7281-3293-8 Retrieved from the Internet: URL:https://arxiv.org/pdf/1801.07698v2.pdf [retrieved on 2020-06-23] * pages 3,4; figure 2 * | 1-15 | |
| X | BOWEN WU ET AL: "Exponential Discriminative Metric Embedding in Deep Learning", ARXIV.ORG, CORNELL UNIVERSITY LIBRARY, 201 OLIN LIBRARY CORNELL UNIVERSITY ITHACA, NY 14853, 7 March 2018 (2018-03-07), XP080858558, * pages 7, 11; figure 3 * | 1-15 | TECHNICAL FIELDS SEARCHED (IPC) G06K |

The present search report has been drawn up for all claims

| Place of search | Date of completion of the search | Examiner |
|---|---|---|
| Munich | 31 March 2021 | Flores Sanchez, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)